(19) **Europäisches Patentamt**

**European Patent Office**

**Office européen des brevets**

(11) **EP 0 532 315 B2**

(12) # NEW EUROPEAN PATENT SPECIFICATION

(45) Date of publication and mention
of the opposition decision:
**19.07.2006 Bulletin 2006/29**

(45) Mention of the grant of the patent:
**10.01.1996 Bulletin 1996/02**

(21) Application number: **92308229.1**

(22) Date of filing: **10.09.1992**

(51) Int Cl.:
***G03G 9/083*** (2006.01)

(54) **Process for producing magnetite particles**

Verfahren zur Herstellung von Magnetit-Teilchen

Procédé pour produire des particules de magnétite

(84) Designated Contracting States:
**CH DE ES FR GB IT LI NL**

(30) Priority: **13.09.1991 JP 26134591**

(43) Date of publication of application:
**17.03.1993 Bulletin 1993/11**

(73) Proprietor: **MITSUI MINING & SMELTING CO., LTD.**
**Chuo-ku,**
**Tokyo (JP)**

(72) Inventors:
• **Hashiuchi, Masachika,**
**c/o Mitsui Mining & Smelting**
**Tamano-shi,**
**Okayama (JP)**
• **Oyama, Akira,**
**c/o Mitsui Mining & Smelting**
**Tamano-shi,**
**Okayama (JP)**
• **Yamanishi, Tadashi,**
**c/o Mitsui Mining & Smelting**
**Tamano-shi,**
**Okayama (JP)**

(74) Representative: **Forstmeyer, Dietmar**
**BOETERS & LIECK**
**Oberanger 32**
**80331 München (DE)**

(56) References cited:
**EP-A- 0 187 434**      **EP-A- 0 247 884**
**EP-A- 0 331 015**      **JP-A- 6 134 070**
**US-A- 4 975 214**

• **PATENT ABSTRACTS OF JAPAN vol. 12, no. 172 (C-497)(3019) 21 May 1988& JP-A-62278131**
• **PATENT ABSTRACTS OF JAPAN vol. 12, no. 219 (C-506)(3066) 22 June 1988 & JP-A-63017222**
• **PATENT ABSTRACTS OF JAPAN vol. 10, no. 185 (C-357)27 June 1986 & JP-A-61034070**
• **PATENT ABSTRACTS OF JAPAN vol. 11, no. 52 (P-548)(2499) 18 February 1987 & JP-A-61219959**
• **Anwendungstechnische Informationen, 8/91**
• **Bayer "Produktspezifikation" dated 05.07.89**
• **Bayer "Anwendungstechnische Informationen" dated 2/87**
• **Bayer "Rechnung Nr. 108/057377" dated 01.03.89**
• **Bayferrox for the production of magnetic tapes, 01.12.1982**
• **Technical data inorganic Bayer Pigments I, 01.10.1984**
• **Comparative tests and Declaration of Mr. Hashiuchi filed with patentee's letter of 06.06.1997**
• **Sworn statements of Mr. Pouls (06.05. and 10.06.1999), Mr. Koerschen (30.04.1999) and Mr. Knopf (30.04.1999)**
• **Analytical experimental report of the powder Bayferrox 8600**

Remarks:
The file contains technical information submitted after the application was filed and not included in this specification

EP 0 532 315 B2

**Description**

This invention relates to and to a process for producing magnetite particles. More particularly, it relates to a process for producing magnetite particles each of which has an elemental silicon in its inside and/or silicon oxide content both internally and exposed at the and on its surface thereof, which particles have an improved balance of properties, i.e. electrical resistance, remanent magnetization and fluidity, the particles being produced by controlling the amount (in terms of silicon) of the silicon and/or silicon oxide component exposed on the surface, and is suitable for use principally as powdery material for magnetic toner for electrostatic copying and as black pigment powder for coating materials.

Magnetite particles obtained by aqueous solution reaction have recently been widely used as magnetic toner materials for dry electronic copiers, printers, etc. The magnetic toner is required to possess various general developing characteristics. The advance of electrophotography in recent years has encouraged rapid progress in copying machines and printers, especially those using the digital technology, with the consequence that the requirements for performances of the magnetic toner have become severer, The apparatus are required to output not merely characters as in the past but also graphics, photographs, etc. Some latest printers offer a print quality of 400 or more dots per inch, producing finer and clearer latent images on the photoreceptor.

To keep pace with this, accordingly high fine-line reproducibility in development has been strongly desired.

Second, the magnetite particles themselves are required to have a high enough electrical resistance to stabilize the image density during electrostatic transfer of an image.

Magnetite particles which meet these requirements have been proposed. As improvements pertaining to the first problem, U.S.P. No. 4,992,191 and Japanese Patent Application Laid-Open Gazettes Nos. (sho.)61-155223 (155223/1986) and (sho.)62-278131 (278131/1987) disclose magnetite particles containing a silicon component in their insides only. These particles are not fully satisfactory as yet in providing image quality with improved fine-line reproducibility. Moreover, the disadvantage of low electrical resistance common to conventional magnetite particles remains unremedied.

Further, the magnetite particles disclosed by the gazettes also have other disadvantages, namely poor fluidity and a tendency of the packed powder to increase in density excessively when subject to vibrations during transportation and other handling, thereby to seriously affect the workability in the subsequent process of toner preparation.

As an improvement in respect of the second problem, Japanese Patent Application Laid-Open Gazette No. (sho.) 54-139544(139544/1979) teaches increasing the electrical resistance of magnetite particles by coating the surface with a silicon component. However, the approach again fails to improve the electrical resistance satisfactory, It cannot meet the recent requirement for finer line reproduction of images especially due to the inability to improve the remanent magnetization.

JP-A-61 340 70 discloses a process for producing a $Fe_3O_4$ pigment by oxidation of a mixture of an aqueous alkaline solution and a ferrous salt solution, wherein a solution of hydroxosilicate or hydroxoaluminate is added to a slurry of a ferrous hydroxide.

An object of the present invention is to provide a process for producing magnetite particles with low remanent magnetization, high electrical resistance, and excellent workability and fluidity.

In attempts to achieve the object, the present inventors have made intensive studies and found that the object is achieved by a process for producing magnetite particles according to claim 1. The particles do not only have elemental silicon and/or silicon oxide contained in their inside but also elemental silicon and/or silicon oxide especially in finely divided form, exposed on surface thereby enabling both the silicon and/or silicon oxide to interact synergistically with the magnetite.

Thus according to this invention, there is a provided a process for producing magnetite particles having elemental silicon and/or a silicon oxide content in the interior thereof and also elemental silicon and/or a silicon oxide content exposed at the surface thereof, said elemental silicon and/or silicon oxide compound at the surface constituting, in terms of silicon, from 0.1 to 2.0% by weight with respect to the total weight of said magnetite particles, and the ratio of the weight of the exposed silicon anchor silicon oxide component to the total weight of the silicon and/or silicon oxide component in the interiors of the said magnetite particles, in terms of silicon, being in the range of 0.05 to 0.7.

The magnetite particles produced according to the present invention are to have elemental silicon and/or silicon oxide present both inside and on the surface. If the particles were to contain such silicon component present inside but not exposed on the surface, their electrical resistance would be low and the fluidity poor. Further, it the particles contain only such silicon component exposed on the surface, the particles have inferior remanent magnetization. The term 'silicon component' will be used hereinafter for succinctness to denote elemental silicon and/or silicon oxide.

The amount of the silicon component, expressed as silicon, present exposed at the surface (hereinafter referred to as "exposed silicon component") related to the total weight of the magnetite particles preferably ranges from 0.1 to 2.0% by weight. (All the amounts for the silicon components are given in terms of elemental silicon hereinafter.) If the amount of the exposed silicon component is less than 0.1% by weight, the magnetite particles obtained tend to achieve only limited improvements in electrical resistance, remanent magnetization and fluidity. It the amount exceeds 2.0 % by weight, favorable properties are attained but the workability is sacrificed, with there being a possibility of fitter cloth clogging at the time of water washing. In the production of magnetite particles, a water washing step is essential to remove the alkali safts, such as sodium and potassium safts, which are by-products of the synthesis of the magnetite. If the amount of exposed silicon component is too large, washing may result in the clogging of the filter cloth, thus reducing the workability. In addition, such excessive amount of exposed silicon component involves a corresponding increase in silicon consumption which is not warranted economically.

The expression "the amount of exposed silicon component" as used herein means the value obtained by the following analytical method.

First, 0.900 g of a sample is weighed and 25 m$\ell$ of a 1N NaOH solution is added thereto. The solution is heated to 45°C with stirring to place silicon present on the particle surface in solution.

Following filtration-out of undissolved matter, the eluate (filtrate) is diluted to 125 m$\ell$ with pure water. The amount of silicon contained in the eluate is determined by plasma emission spectrometry (ICP). Exposed silicon component (wt%) = {[silicon contained in the eluate (g/$\ell$) x 125 + 1000] / 0.900 (g)} x 100.

The total silicon amount is determined by dissolving a sample in a hydrochloric-hydrofluoric acid mixed solution and then subjecting the resulting solution to plasma emission spectrometry (ICP).

As stated above, the magnetite particles produced according to the present invention require a silicon component to be present both inside and on the surface of each particle. It was not until the present inventors found an analytical method which draws a distinction between the silicon component exposed at the surface of magnetite particles and the silicon component present inside the particles that the present invention was accomplished.

With the magnetite particles produced according to the present invention it is desirable for the electrical resistance, remanent magnetization and fluidity of the particles that the BET specific surface area (in $m^2/g$) of the magnetite particles represented by equation (1):

$$BET\ (m^2/g) = 6/(particle\ dia.\ (\mu m) \times 5.2) + B \qquad\qquad (1)$$

be such that when the amount of the exposed silicon component (wt%) is assumed to be A. the relation B/A $\geqq$ 30 is satisfied.

Conversely if the magnetite particles show a relation B/A < 30, the electrical resistance, remanent magnetization and fluidity thereof are low.

It is generally believed that particles or powder having excellent dispersibility usually must have a small specific surface area in relation to the particle diameter and also must have low oil absorption. The magnetite particles produced according to the present invention have a large specific surface area in relation to the particle diameter and also high oil absorption. Since each of the magnetite particles produced according to the present invention has the silicon component at its surface, the surface can easily wet with a resin, this apparently contributing to the improved dispersibility.

With magnetite materials produced according to this invention, the ratio of the amount of exposed silicon component (A) to the total amount of the silicon component in the magnetite particles (C: in terms of silicon), (A/C), is in the range of 0.05 to 0.7, preferably in the range of 0.1 to 0.6, if the desired properties are to be attained.

The process for producing magnetite particles according to the present invention comprises the steps of adding a silicon component to a solution of a ferrous salt as a main ingredient, mixing an alkali into the solution at a rate of from 1.0 to 1.1 equivalents of the alkali per equivalent of ferrous ions present, subjecting the obtained mixture to an oxidation reaction while the pH of the mixture is maintained in the range of from 7 to 10, replenishing ferrous ions to adjust the total amount of iron in the mixture to an amount of from 0.9 to 1.2 equivalents of ferrous ions per equivalent of the alkali initially added in the course of the reaction, and further subjecting the mixture to an oxidation reaction while the pH of the mixture is maintained in the range of from 6 to 10.

This process will now be described in further detail.

First, a silicon component is added to a solution comprising chiefly of a ferrous salt as main ingredient. Desirably the ferrous saft to be used for the present invention is ferrous sulfate and the silicon component is a solution containing a silicon colloid prepared from a silicate compound.

The obtained solution is then mixed with an alkali (from 1.0 to 1.1 equivalents per equivalent of ferrous ions in the solution) to form ferrous hydroxide.

An oxygen-containing gas, preferably air, is blown into the ferrous hydroxide, preferably at 60 to 100 °C, more preferably at 80 to 90 °C to subject the ferrous hydroxide to an oxidation reaction and thereby to produce seed crystals. The extent of the oxidation reaction is controlled through the analysis of unreacted ferrous hydroxide and adjustment of the quantity of the oxygen-containing gas or is controlled by aeration. It is important to maintain the pH in the range of 7 to 10 during the oxidation reaction.

In the course of the oxidation reaction, when the seed crystal production has accounted for production of 1 to 30%, preferably 2 to 10%, of the total amount of the oxidation product to be obtained, additional iron is supplied to replenish the total iron content in the reaction mixture to an amount of 0.9 to 1.2 equivalents, preferably 1.05 to 1.15 equivalents, per equivalent of the alkali initially added. It is desirable that the additional iron to be used here take the form of a solution of a ferrous salt such as ferrous sulfate.

Utilizing the same oxidising conditions as those described above, the oxidation reaction is continuously carried out to produce particles while the pH of the reaction mixture is maintained in the range of 6 to 10, preferably 6 to 9. The particles are then washed, filtered, dried, and ground by usual methods to give the desired magnetite particles.

In the process of the present invention, as stated above, the pH during the oxidation reaction is preferably adjusted to be within the range of 6 to 10. If the pH during the oxidation reaction is above the neutral region, silicon is incorporated into the magnetite particles. Conversely, if it is below neutral, silicon is scarcely incorporated inside but may be deposited on the surface.

The observation by the present inventors of the particle shape in the course of the oxidation reaction revealed that the seed crystals formed by the initial reaction are indefinite in shape, but they become spherical in the neutral to weakly alkaline (pH 6-9) environments in the latter hall of the process. Spherical magnetite particles are preferably used for magnetic toners and the like. Since the magnetite particles obtained by the process of the present invention have the silicon component on their surfaces, the magnetite particles have both a high oil absorption and a large BET specific surface area, even it the magnetite particles are spherical. The term "spherical" used herein is intended to mean "being a sphere having a maximum diameter and a minimum diameter which satisfy the following relationship: (max. dia.) / (min. dia.) = 1.0 - 1.1".

Further, in accordance with the invention, the magnetite particles thus formed and washed with water may be then granulated during or after drying to attain more excellent fluidity and workability.

The magnetite particles produced according to the present invention exhibit high electrical resistance, low remanent magnetization, and good fluidity. Thus the magnetite particles are suitable for use as powdery material of magnetic toners for electrostatic copying.

The process of the present invention permits the mass production on an industrial scale of the magnetite particles having such desirable properties mentioned above.

The present invention will be better understood by the following Examples (Examples 5 and 10 are not within the scope of the present invention) taken in conjunction with the following Comparative Examples.

Example 1

1005 g of sodium silicate having a $SiO_2$ grade (content) of 28 % were weighed and added, following the pH adjustment, to $57\ell$ of an aqueous solution of ferrous sulfate containing 2.4 mol/$\ell$ of $Fe^{2+}$.

The aqueous solution of ferrous sulfate containing the silicic acid component was mixed with $65\ell$ of a 4.3N aqueous solution of NaOH. Air was then blown into the mixed solution at a flow rate of 40 $\ell$/min for 30 min to form seed crystals while the temperature of the mixed solution was maintained at 80°C.

Then, $6.5\ell$ of an aqueous solution of ferrous sulfate having the same composition as that used for the formation of the seed crystals were added to the thus obtained iron hydroxide slurry containing the seed crystal particles, after which air was blown into the slurry at a flow rate of $40\ell$/min to subject the slurry to an oxidation reaction while the temperature of the slurry was maintained at 80°C. In the course of the oxidation reaction, when a decrease in pH was detected, a 12.5N aqueous solution of NaOH was added to the slurry to maintain the pH of the slurry in the range of pH 8 to 10. The oxidation reaction was terminated in 6 hours.

The resultant particles were washed, fiftered, dried, and ground by conventional methods.

The magnetite particles thus obtained were tested to determine the amount of exposed silicon component (in terms of silicon), particle diameter, workability, electrical resistance, remanent magnetization, static charge, fluidity, oil absorption, etc. The obtained results are shown in Table 1. The amount of exposed silicon component was determined by the analytical method described above, and the other data such as the particle diameter, electrical resistance, were measured by the following methods.

(1) Particle diameter

The magnetite particles tested were photographed by a transmission electron micrograph (magnification 30000X). The diameters of the particles shown on the photograph were measured and the average was taken as the particle diameter.

(2) Workability

This was evaluated from whether or not the filter cloth used was clogged during the water washing step.

(3) Electrical resistance

10 g of a sample were placed in a sample holder and compressed under a pressure of 600 kg/cm$^2$ into a tablet of 25 mm in diameter. Electrodes were attached to the tablet, and its electrical resistance was determined under a pressure of 150 kg/cm$^2$. The electrical resistance of the magnetite particles was calculated from the thickness, cross-sectional area, and the obtained resistivity value of the sample tablet used.

(4) Remanent magnetization ($\sigma_r$)

This was determined with an applied magnetic field of 10kOe, using a vibrating sample type magnetometer (Model VSM-P7 manufactured by Toei Kogyo Co., Ltd.). Any $\sigma_r$ value within the range of 5 to 6 emu/g was rated "medium"; that which exceeded the range was rated "high", and that which fell below the range rated "low".

(5) Fluidity

The angle of repose and the degree of aggregation of the magnetite particles tested were measured using a powder tester manufactured by Hosokawa Micron Co.,Ltd. Particles with an angle of repose not greater than 40 deg were indicated "small" and those greater than 40 deg "large". The smaller the angle of repose and the degree of aggregation, the higher the fluidity the powder was judged to possess.

(6) Static charge

This was determined using an iron powder carrier by the blow-off method.

(7) Oil absorption

This was measured in accordance with JIS K 5101.

Examples 2 to 7

Magnetite particles were obtained in the same manner as that described in the Example 1 except that the amount of sodium silicate added, the pH during the oxidation reaction (crystal growth reaction), and the diameter of the resulting particles were varied.
The properties and characteristics of those magnetite particles were determined in the same way as that in the Example 1, respectively. The results obtained are given in Table 1.

Example 8

Magnetite particles were obtained in the same manner as that described in the Example 3 except that the particles grown in the same manner as that in the Example 3 were further granulated after the washing step.
The properties and characteristics of the magnetite particles were determined in the same way as in Example 1. The results obtained are given in Table 1.

Example 9

Magnetite particles were obtained in the same manner as that described in the Example 3 with the exception that the particles obtained were pseudohexahedral in shape a result of the use of sodium carbonate as the alkali.
The properties and characteristics of the magnetite particles were determined in the same way as that in the Example

1. The results obtained are given in Table 1.

Example 10

Magnetite particles were obtained in the same manner as that described in the Example 1 except that the pH during the oxidation reaction (crystal growth reaction) was adjusted to 10 to 12. There was no silicon component present on the surface of the obtained magnetite particles.
500 g of the magnetite particles containing a silicon component merely inside were slurried in a ratio of 100 g/

$\ell$. The slurry was stirred while the temperature thereof was kept at 50 °C. Subsequently, the slurry was incorporated with 2.7 g of sodium silicate having a $SiO_2$ grade of 28%, and stirred for 30 min, after which 1N $H_2SO_4$ was gradually added to the slurry to adjust the pH to 7 over an hour and thereby to coat the particle surface with the silicon component.

The resultant particles were washed, filtered, dried, and ground by conventional methods.

The properties and characteristics of the magnetite particles so obtained were determined in the same way as for the particles of the Example 1. The results obtained are given in Table 1.

Examples 11 and 12

Magnetite particles were obtained in the same manner as that described in Example 10 except that the amount of sodium silicate added was varied.

The properties and characteristics of the magnetite particles were determined in the same way as for the particles of Example 1. The results obtained are given in Table 1.

Comparative Example 1

Magnetite particles were obtained in the same manner as that described in Example 3 except that no sodium silicate was added.

The properties and characteristics of the magnetite particles were determined in the same way as for the particles of Example 1. The results obtained are given in Table 1.

Comparative Example 2

Magnetite particles were obtained in the same manner as that described in Example 1 except that the pH during the oxidation reaction (crystal growth reaction) was adjusted within the range of 10 to 12. There was no silicon component present on the surfaces of the magnetite particles obtained.

The properties and characteristics of the magnetite particles were determined in the same way as for the particles of Example 1. The results obtained are given in Table 1.

Comparative Example 3

The magnetite particles obtained in the Comparative Example 1 were further coated with a silicon component in conformity with the coating procedure of Example 10.

The properties and characteristics of the resultant magnetite particles were determined in the same manner as for the particles of Example 1. The results obtained are given in Table 1.

Comparative Example 4

Generally in conformity with the procedure taught in Japanese Patent Application Laid-Open Gazette No.(sho.) 54-139544 (139544/1979), magnetite particles coated with a silicon component were obtained.

The properties and characteristics of the magnetite particles were determined in the same way as for the particles of Example 1. The results obtained are given in Table 1.

Comparative Example 5

Generally in conformity with the procedure taught in Japanese Patent Application Laid-Open Gazette No.(sho.) 61-155223 (155223/1986), magnetite particles containing a silicon component in their insides only were obtained.

The properties and characteristics of the magnetite particles were determined in the same way as that of the Example 1. The results obtained are given in Table 1.

# T a b l e 1

| Example . Comp. Ex. | pH value of reaction mixure during oxidation reaction (crystal growth reaction) | Amount of silicon (wt% based on total weight of magnetite particles) | | | Particle diameter (μm) | BET (m²/g) | B/A *1 | A/C |
|---|---|---|---|---|---|---|---|---|
| | | Amount of exposed silicon (A) | Total amount of silicon (C) | Amount of silicon present inside (C - A) | | | | |
| Example 1 | 8 - 10 | 0.14 | 1.08 | 0.96 | 0.20 | 15 | 66 | 0.13 |
| Example 2 | 7 - 9 | 0.21 | 1.20 | 0.99 | 0.21 | 16 | 50 | 0.18 |
| Example 3 | 6 - 8 | 0.52 | 1.50 | 0.98 | 0.21 | 36 | 59 | 0.35 |
| Example 4 | 6 - 8 | 1.47 | 2.27 | 0.80 | 0.20 | 55 | 33 | 0.65 |
| Example 5 | 6 - 8 | 2.30 | 3.40 | 1.10 | 0.19 | 78 | 31 | 0.68 |
| Example 6 | 6 - 8 | 0.39 | 1.23 | 0.84 | 0.11 | 25 | 37 | 0.32 |
| Example 7 | 6 - 8 | 0.34 | 0.89 | 0.55 | 0.21 | 18 | 36 | 0.38 |
| Example 8 | 6 - 8 | 0.52 | 1.50 | 0.98 | 0.21 | 27 | 41 | 0.35 |
| Example 9 | 8 - 10 | 0.33 | 1.48 | 1.15 | 0.19 | 19 | 39 | 0.22 |
| Example 10 | 10 - 12 | 0.07 | 1.15 | 1.08 | 0.19 | 7 | 13 | 0.06 |
| Example 11 | 10 - 12 | 0.20 | 1.28 | 1.08 | 0.19 | 8 | 10 | 0.16 |
| Example 12 | 10 - 12 | 0.51 | 1.59 | 1.08 | 0.19 | 9 | 6 | 0.32 |
| Comp. Ex. 1 | 6 - 8 | 0 | 0 | 0 | 0.22 | 6 | - | - |
| Comp. Ex. 2 | 10 - 12 | 0 | 1.08 | 1.08 | 0.19 | 6 | - | 0 |
| Comp. Ex. 3 | 6 - 8 | 0.13 | 0.13 | 0 | 0.22 | 7 | 14 | 1.00 |
| Comp. Ex. 4 | 6 - 8 | 0.15 | 0.15 | 0 | 0.22 | 6 | 5 | 1.00 |
| Comp. Ex. 5 | 6 - 7 | 0 | 0.14 | 0.14 | 0.18 | 8 | - | 0 |

*1 : B = BET (m²/g) - {6/ (Particle dia. (μm) × 5.2)}

EP 0 532 315 B2

## Table 1 (cont.)

| Example · Comp. Ex. | Oil absorption (ml/100g) | Workability | Electrical resistance (Ωcm) | Remanent magnetization (σr) | Static charge (μc/g) | Fluidity Angle of repose (%) | Fluidity Degree of aggregation (%) | Evaluation |
|---|---|---|---|---|---|---|---|---|
| Example 1 | 23 | O | $9 \times 10^4$ | Low | -30 | Small | 15 | O |
| Example 2 | 24 | O | $2 \times 10^5$ | Low | -35 | Small | 11 | O |
| Example 3 | 26 | O | $5 \times 10^6$ | Low | -46 | Small | 10 | O |
| Example 4 | 36 | △ | $1 \times 10^7$ | Low | -68 | Small | 10 | O |
| Example 5 | 48 | × | $6 \times 10^7$ | Low | -90 | Small | 9 | O |
| Example 6 | 24 | O | $2 \times 10^5$ | Medium | -33 | Small | 12 | O |
| Example 7 | 22 | O | $2 \times 10^5$ | Low | -46 | Small | 10 | O |
| Example 8 | 26 | O | $2 \times 10^5$ | Low | -44 | Small | 2 | O |
| Example 9 | 24 | O | $8 \times 10^4$ | Medium | -29 | Small | 20 | O |
| Example 10 | 30 | O | $9 \times 10^3$ | Medium | -41 | Large | 43 | △ |
| Example 11 | 31 | O | $1 \times 10^4$ | Medium | -67 | Large | 34 | △ |
| Example 12 | 33 | O | $4 \times 10^4$ | Medium | -80 | Large | 31 | △ |
| Comp. Ex.1 | 20 | O | $1 \times 10^3$ | High | -19 | Large | 48 | × |
| Comp. Ex.2 | 29 | O | $4 \times 10^3$ | Medium | -14 | Large | 45 | × |
| Comp. Ex.3 | 22 | O | $4 \times 10^3$ | High | -40 | Large | 39 | △ |
| Comp. Ex.4 | 21 | O | $2 \times 10^3$ | High | -24 | Small | 38 | △ |
| Comp. Ex.5 | 16 | O | $7 \times 10^3$ | Medium | - | Small | 60 | × |

It It is apparent from the results indicated in Table 1 that the magnetite particles of the Examples 1 to 4 and 6 to 9, all obtained by the process of the present invention, proved satisfactory in all of electrical resistance, remanent magnetization and fluidity. The magnetite particles of Example 4, which had a fairly large amount of the exposed silicon component, had somewhat inferior workability and production economics.

The magnetite particles of Examples 11 to 12 which were obtained by coating magnetite particles containing silicon merely inside with a silicon component by immersion, were inferior in electrical resistance, remanent magnetization and fluidity to those of Examples 1 to 4 and 6 through 9 but the values fell within allowable ranges.

On the other hand, the magnetite particles of Comparative Example 1 that contained no silicon component, those of the Comparative Examples 2 and 5 that contained a silicon component merely inside, and those of Comparative Examples 3 and 4 which had a silicon component only exposed on the surface all had low electrical resistance and large remanent magnetization. Further, the magnetite particles of the Comparative Examples 1, 2 and 5 had inferior fluidity, too.

## Claims

1.   A process for producing magnetite particles comprising the steps of adding a silicon component to a solution of a ferrous salt as a main ingredient, mixing an alkali into the solution at a rate of from 1.0 to 1.1 equivalents of the alkali per equivalent of ferrous ions present, subjecting the obtained mixture to an oxidation reaction while the pH of the mixture is maintained in the range of from 7 to 10, replenishing ferrous ions to adjust the total amount of iron in the mixture to an amount of from 0.9 to 1.2 equivalents of ferrous ions per equivalent of the alkali initially added in the course of the reaction, and further subjecting the mixture to an oxidation reaction while the pH of the mixture is maintained in the range of from 6 to 10.

## Patentansprüche

1.   Verfahren zum Herstellen von Magnetitpartikeln, umfassend die Schritte: Zugabe eines Silicium-Bestandteils zu einer Eisen(II)-Salzlösung als Hauptinhaltsstoff, Einmischen eines Alkalis in die Lösung in einer Menge von 1,0 bis 1,1 Äquivalenten Alkali pro Äquivalent vorliegender Eisen(II)-Ionen, Aussetzen des erhaltenen Gemischs einer Oxidationsreaktion, während der pH-Wert des Gemischs im Bereich von 7 bis 10 gehalten wird, Auffüllen von Eisen (II)-Ionen zur Einstellung der Gesamt-Eisenmenge im Gemisch auf eine Menge von 0,9 bis 1,2 Äquivalenten Eisen (II)-Ionen pro Äquivalent des anfänglich in den Reaktionsverlauf hinzugegebenen Alkalis und weiteres Aussetzen des Gemischs einer Oxidationsreaktion, während der pH-Wert des Gemisches im Bereich von 6 bis 10 gehalten wird.

## Revendications

1.   Procédé pour produire des particules de magnétite comprenant les étapes d'addition d'un composant silicium à une solution d'un sel ferreux comme principal ingrédient, de mélange d'un alcali dans la solution à un taux de 1,0 à 1,1 équivalent d'alcali par équivalent d'ions ferreux présents, de soumission du mélange obtenu à une réaction d'oxydation tandis que le pH du Mélange est maintenu dans la gamme de 7 à 10, de réapprovisionnement d'ions ferreux pour ajuster la quantité totale de fer dans le mélange à une quantité de 0,9 à 1,2 équivalent d'ions ferreux par équivalent d'alcali initialement additionné au cours de la réaction, et de soumission ensuite du mélange à une réaction d'oxydation tandis que le pH du mélange est maintenu entre 6 et 10.